# EUROPEAN PATENT SPECIFICATION

(11) **EP 3 929 247 B1**
(45) Date of publication and mention of the grant of the patent: **12.08.2026**
(21) Application number: 21181399.3
(22) Date of filing: 24.06.2021
(51) Int. Cl.: C08L 67/06, B29B 17/00, B29B 17/04, B29L 31/00, B32B 5/26, B32B 27/36, B29C 70/46, B29D 99/00, B29D 24/00, B29C 37/00, B29C 43/36

(54) **RECYCLED PART FOR MANUFACTURING A POLYESTER RESIN BASED FIBER-REINFORCED DOOR, AS WELL AS POLYESTER RESIN BASED FIBER-REINFORCED DOOR WHICH INCLUDES THE RECYCLED PART**
RECYCELTES TEIL ZUR HERSTELLUNG EINER FASERVERSTÄRKTEN TÜR AUF POLYESTERHARZBASIS SOWIE FASERVERSTÄRKTE TÜR AUF POLYESTERBASIS MIT DEM RECYCELTEN TEIL
PIÈCE RECYCLÉE POUR LA FABRICATION D'UNE PORTE RENFORCÉE PAR DES FIBRES À BASE DE RÉSINE DE POLYESTER, AINSI QU'UNE PORTE RENFORCÉE PAR DES FIBRES À BASE DE RÉSINE DE POLYESTER COMPRENANT LA PIÈCE RECYCLÉE

(30) Priority: 24.06.2020 FI 20205669
(43) Date of publication of application: 29.12.2021
(73) Proprietor: Muovilami OY, 63700 Ähtäri (FI)
(72) Inventor: AHO, Juha-Matti, 63700 ÄHTÄRI (FI)
(74) Representative: Berggren Oy

(56) References cited:
- EP-A1- 0 943 743
- EP-A1- 3 202 813
- EP-A2- 2 602 093
- WO-A1-2007/085836
- CA-A1- 2 823 868
- CN-A- 105 462 205
- US-A- 4 550 540

## Description

The invention relates to a recycled part according to the preamble of claim 1 for manufacturing a polyester resin based, fiber-reinforced door, as well as to a polyester resin based, fiber-reinforced door which comprises said recycled part.

The invention relates also to a method of manufacturing a polyester resin based, fiber-reinforced door which includes a recycled part, as well as to the use of a recycled part for manufacturing a polyester resin based door.

Commercially available is a door resistant to chemicals and water, which is a seamless, compression molded polyester resin based door. This door may be for example a fire door, X-ray door, access door, soundproof door, swing door or sliding door. The door panel has its outer surface glazed by making it from gelcoat, and under this outer gelcoat surface (hereinafter gelcoat skin layer) is present a fiberglass-reinforced polyester matrix made up of several fiberglass-reinforced polyester polymer layers. Such a door is lightweight and its door panel is resistant to chemicals, water and moisture. The gelcoat skin layer is smooth and additionally provides the door panel with resistance to dust and soiling. US4550540A and CN105462205 A disclose polyester resin based glass fiber-reinforced doors and methods of their manufacture.

Now, with increasingly stringent environmental protection standards, a need has arisen to reduce the amount of virgin plastics in plastic products, including compression molded doors as mentioned above, by striving to recycle door materials. At the same time, it would be necessary to retain the compression molded door's resistance to chemicals, water, mechanical stress resistance, as well as impact strength.

The invention is defined by a polyester resin based glass fiber-reinforced door according to claim 1 and a method of manufacturing a polyester resin based, glass fiber-reinforced door according to claim 7.

An example going beyond the scope of the appended claims relates to a recycled part for manufacturing a polyester resin based fiber-reinforced door. The fiber-reinforced door comprises a sandwich-structured door panel body, which is fabricated by compression molding from virgin plastic composite as well as from a recycled part, and which door panel's body is made up of an ethylenically unsaturated polyester resin based fiber-reinforced polyester matrix providing the door panel with mechanical strength, and of a gelcoat skin layer capable of being laid on top of said fiber-reinforced polyester matrix during the course of compression molding, providing the door panel with resistance to chemicals and based on ethylenically unsaturated polyester resin which has been allowed to harden in the mold prior to laying said fiber-reinforced polyester matrix on top of said gelcoat skin layer. The door panel's body comprises two co-directional leaf elements seamlessly positioned by means of a bridge element opposite to and at a distance from each other in such a way that in a space defined by said leaf elements of the body and by the bridge element adapted to interconnect the same is left a hollow core layer of the door panel. The core layer is capable of having introduced therein some optional filler material, wherein the bridge element is transverse to the direction of the leaf elements and encircles the longitudinal and lateral end faces of the leaf elements.

The resistance of a compression molded door panel's body to hard body impact, when tested in compliance with standard SFS-EN 950, is such that the impact mark resulting in the door panel's body has a diameter of not more 1,5 mm and an average for indentations of not more than 1 mm.

The recycled part comprises a one-piece door panel's body, which includes two co-directional leaf elements positioned by means of a bridge element opposite to and at a distance from each other. The recycled part has its door panel's body fabricated from a fiber-reinforced polyester matrix, the top of which lacks most of the gelcoat skin layer, preferably the entire gelcoat skin layer.

An example going beyond the scope of the claims relates also to a polyester resin based fiber-reinforced door, which comprises the recycled part. Hence, the door comprises a sandwich-structured door panel's body which is fabricated by compression molding from both virgin plastic composite by allowing gelcoat coatings to harden on an internal surface of two separate mold halves and by laminating on top of the discussed gelcoat coatings one or more fiber-reinforced polyester matrix layers, and from a one-piece recycled part, which is fabricated from an unsaturated polyester resin-based fiber-reinforced polyester matrix, by disposing the recycled part between the fiber-reinforced polyester matrix layer/layers laminated on top of the gelcoat skin layers and by closing the mold.

The disclosure going beyond the scope of the claims further relates to the use of a recycled part in the manufacture of a polyester resin based fiber-reinforced door, wherein the manufacture of a fiber-reinforced door is performed by compression molding, and the recycled part comprises a one-piece door panel's body which includes two co-directional leaf elements positioned by means of a bridge element opposite to and at a distance from each other, and which door panel's body of the recycled plastic composite part is fabricated from a fiber-reinforced polyester matrix.

The one-piece recycled part indicates that the recycled part is a monolithic, continuous article.

The seamlessness of a door panel indicates here that the gelcoat skin layer, which covers the door panel's surface, does not have slits or openings permeable to water or air. The gelcoat skin layer, or gelcoat glazing, builds thereby an air- and watertight surface on top of a fiber-reinforced polyester-fabricated door panel. The gelcoat skin layer is smooth in terms of its surface quality, being therefore also dirt and dust repellant.

The door panel's core layer refers to a space which is left between the compressed door leaf halves of fiber-reinforced polyester matrix as these door leaves are interconnected by a transverse bridge element.

Each door leaf half, in turn, comprises a plastic composite laminated on a mold half (mold section). The plastic composite comprises a polyester resin based fiber-reinforced laminate (fiber-reinforced polyester matrix), whose mold-facing side has a hardened gelcoat skin layer on its surface.

The invention is based on conducting door manufacturing by making use of a prefabricated door panel whose gelcoat skin layer has been ground off. The removal of a gelcoat skin layer from the top of a door panel enables the latter to be used almost as such or in slight modification in the compression molding of a new door panel.

Since the door made up of recycled door leaves does not have a gelcoat skin layer on its surface, the properties of a door consisting of such a pair of door leaves are significantly different as compared to a similar door that has a gelcoat skin layer on top of its surface.

The recycled part does not measure up to the resistance to chemicals and oxidizing agents as determined for at least two hours or at least 16 hours according to standard EN 14688 for one or more of the following substances: an acid such as acetic acid (10% v/v), a base such as sodium hydroxide (5% (m/m), an alcohol such as ethanol (70% v/v), a bleach such as sodium hypochlorite, an oxidant such as methylene blue (1% m/m), and a salt such as sodium chloride (50% v/v).

Further, the recycled part's surface does not measure up to the required resistance to cold liquids as determined according to standard DIN 68861 (SFS- EN 12720) for three or more of the following substances: coffee, mild detergent, cola beverage, ink (waterproof), olive oil, paraffin oil, acetone, hydrogen chloride, milk, animal blood (the liquid brings about at least a moderate change 3 on the recycled part's surface).

Cold liquids stain the surface of a recycled part when the recycled part has its surface consisting of a fiber-reinforced polyester matrix, making its surface rough and susceptible to gathering dirt and dust.

A one-piece recycled part of the invention is used for manufacturing a polyester resin based fiber-reinforced door. The manufacture of a fiber-reinforced door is carried out by compression molding and, in this case, the recycled part comprises a one-piece door panel's body which includes two co-directional leaf elements positioned by means of a bridge element opposite to and at a distance from each other. In the recycled part of plastic composite, the door panel's body is fabricated from a fiber-reinforced polyester matrix.

A fiber-reinforced door, going beyond the scope of the claims, is manufactured by using a recycled part as follows:
a) Two mold sections (mold halves) are provided, by which the fabrication of the door panel's each leaf element, as well as a bridge element connecting the same, is adapted to occur.
b) Onto the surface of both mold parts is first applied a gelcoat coating (glazing) made of polyester resin, and on top of the gelcoat coating is laminated at least one ethylenically unsaturated polyester resin based fiber-reinforced resin layer, which is fortified with a fiber material.
c) Prior to compressing the mold sections, the recycled part is placed between the fiber-reinforced polyester matrix layers, said polyester matrix layers having been laminated on top of the hardened gelcoat coating laid on the internal surface of each mold section. The recycled part comprises a one-piece door panel's body, which includes two co-directional leaf elements positioned by means of a bridge element opposite to and at a distance from each other.
d) The mold is closed by compressing said two mold sections together while heating.

In the recycled part, the door panel's body is fabricated from a fiber-reinforced polyester matrix and from its top is missing most of the gelcoat skin layer, preferably the entire gelcoat skin layer.

It is in the aforementioned fiber-reinforced door manufacturing method that on top of a hardened gelcoat coating, present on each mold half, is laminated just one fiber-reinforced polyester resin layer.

It is by using the recycled part that a major benefit is achieved in the sense of enabling the portion of virgin fiber-reinforced polyester matrix in a compression molded door to be reduced as opposed to a compression molded door fabricated from virgin plastic raw material. The amount of reinforcement fiber can also be respectively reduced by the use of a recycled part by 50 to 90% when compared to a compression molded door fabricated from virgin plastic raw material.

This way, the door's body and the door's materials can be recycled multiple times, basically endlessly.

In one embodiment of the invention, the recycled part is fabricated from a blank recycled part, which has had a window opening. The window opening has been produced in said blank recycled part by removing a window from the door panel's body.

In another embodiment of the invention, the recycled part is fabricated from a blank recycled part, including at least one hardware opening which has been produced by removing a hardware item from the door panel's body.

In one further embodiment of the invention, the recycled part comprises filler pieces and possibly an adhesive used for gluing the filler pieces. In this case, the recycled part is fabricated by fitting the filler pieces in the openings of a blank recycled part used in the fabrication of the recycled part. The filler pieces are either filler pieces removed from the door panel or separately prepared filler pieces.

It is the above-described approach that preferably enables utilization of filler pieces, which result from the removal of window openings and hardware items and which would otherwise go to waste.

In one further preferred embodiment of the invention, the polyester resin used for making a polyester matrix has been composed by allowing at least one ethylenically unsaturated dicarboxylic acid or its acid anhydride to react with at least one polyol.

Preferably, the polyester resin used for making a polyester matrix has been composed by allowing at least one ethylenically unsaturated dicarboxylic acid or its acid anhydride or a mixture of unsaturated dicarboxylic acid and saturated dicarboxylic acid to react with at least one polyol.

The ethylenically unsaturated dicarboxylic acid or its acid anhydride has thus been selected from a group, including: maleic acid, maleic anhydride, fumaric acid, itaconic acid, phthalic acid, phthalic anhydride, isophthalic acid, terephthalic acid, tetrahydrophthalic anhydride, nadic anhydride, methyl nadic anhydride, hexahydrophthalic anhydride, dimethyl terephthalate or recycled terephthalate.

The polyol has thus been selected from a group, including glycols such as ethylene glycol; diols such as 1,3-propanediol, 1,4-propanediol, 1,4-butanediol, 2,2-methyl-1,3-propanediol, 2-methyl-1,3-propanediol; glycol ethers; and triols such as glycerol and trimethylpropane.

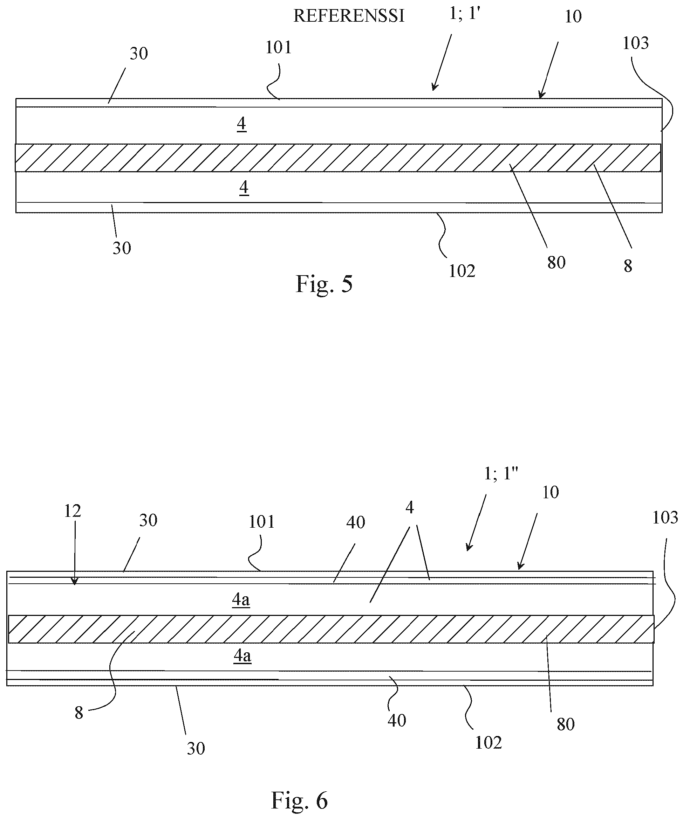

The invention will now be described in more detail with reference to the accompanying figures. Illustrated in fig. 5, for the sake of comparison, is a door which is manufactured from virgin plastic material (reference figure).
Fig. 1 illustrates a ready-to-use access door installed on a door frame, as seen directly from the front.
Fig. 2 illustrates one recycled blank of a door panel as seen obliquely from above.
Fig. 3A illustrates, in a perspective view, the fabrication of one recycled part from a respective recycled blank.
Fig. 3B shows, in a perspective view from a viewing angle slightly other than that of fig. 3A, the fabrication of a recycled part by filling openings present in a blank recycled part.
Fig. 4 illustrates schematically the mold manufacturing of a door.
Fig. 5 illustrates, in a schematic cross-sectional view, a door panel fabricated from virgin material.
Fig. 6 illustrates, in a schematic cross-sectional view, a door panel fabricated partly from virgin and partly from recycled material.
Fig. 7 illustrates, in a schematic cross-sectional view, a door panel which only comprises a recycled part or a blank therefor.

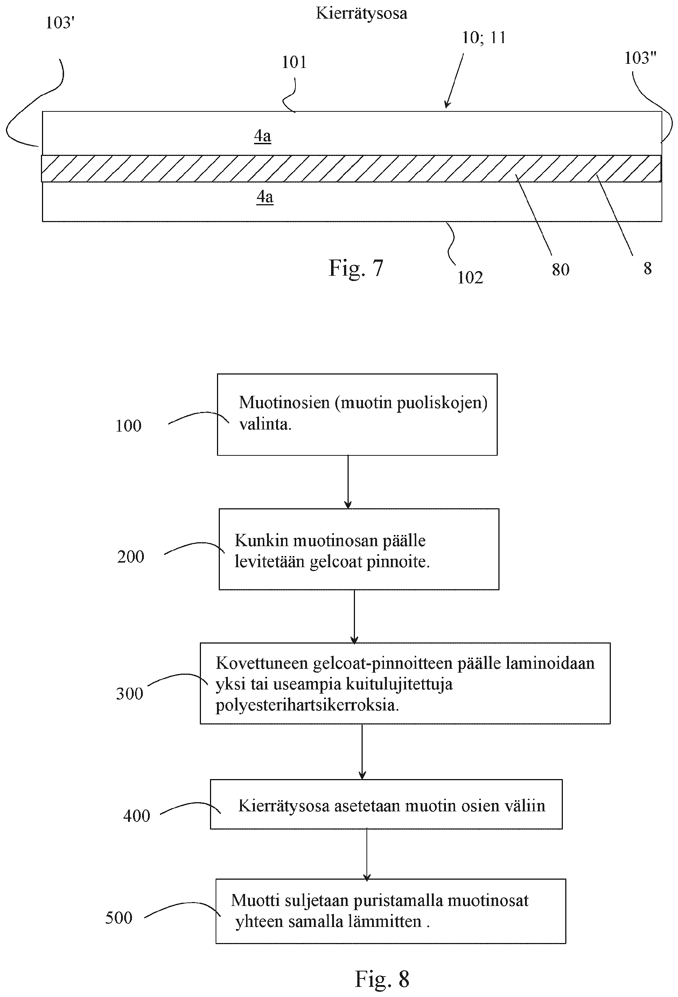

The chart of fig. 8 represents a manufacturing method for a door which contains the recycled part.

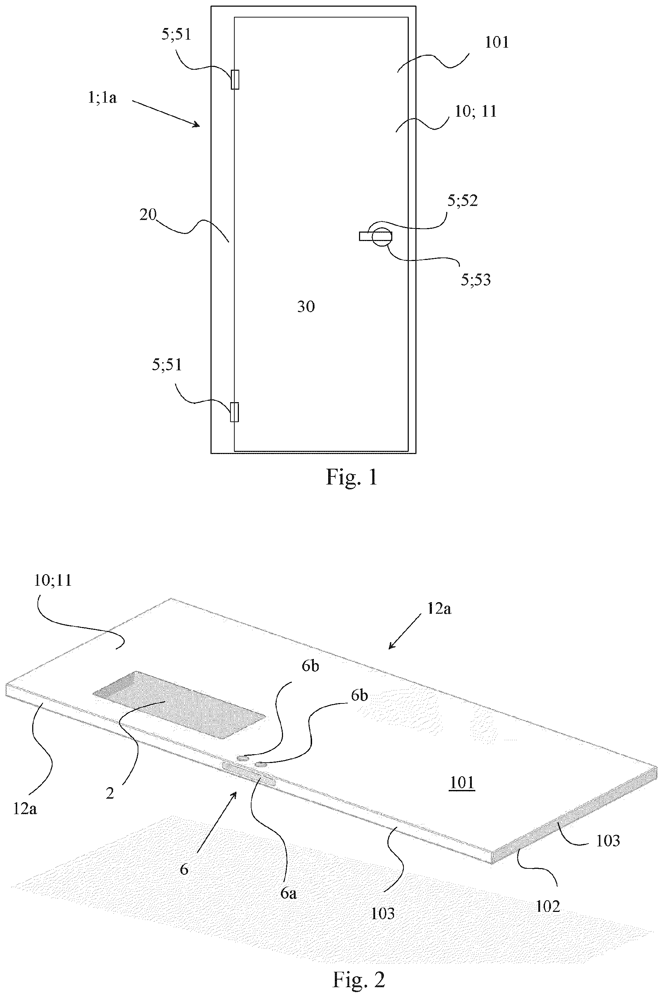

Next reviewed are the principal features of the invention with reference to figs. 1-7.

Fig. 1 shows schematically a door 1 which is installed on a door frame 20 and the door including a recycled part 12. The door 1 is here an access door 1a. The door 1 has the body of its door panel 10 provided with a polyester resin matrix and on top of that lies a so-called gelcoat skin layer 30 (glazing). The door panel 10 has a sandwich-structured body, which is fabricated by compression molding from a plastic composite composed in part of a recycled material. The door 1 depicted in fig. 1 comprises a lock 5; 53 mounted on the door panel 10, as well as a handle 5; 52. The door further comprises a doorway-surrounding frame 20, in which the door's 1 door panel 10 is fitted by means of hinges 5; 51.

The door 1 may also comprise a slide rail, extending laterally relative to the doorway and enabling the door's 1 door panel 10 to be fitted therein by means of a roller system or the like sliding element.

Fig. 2 shows a blank recycled part 12a made up of a recycled door panel 10; 11.

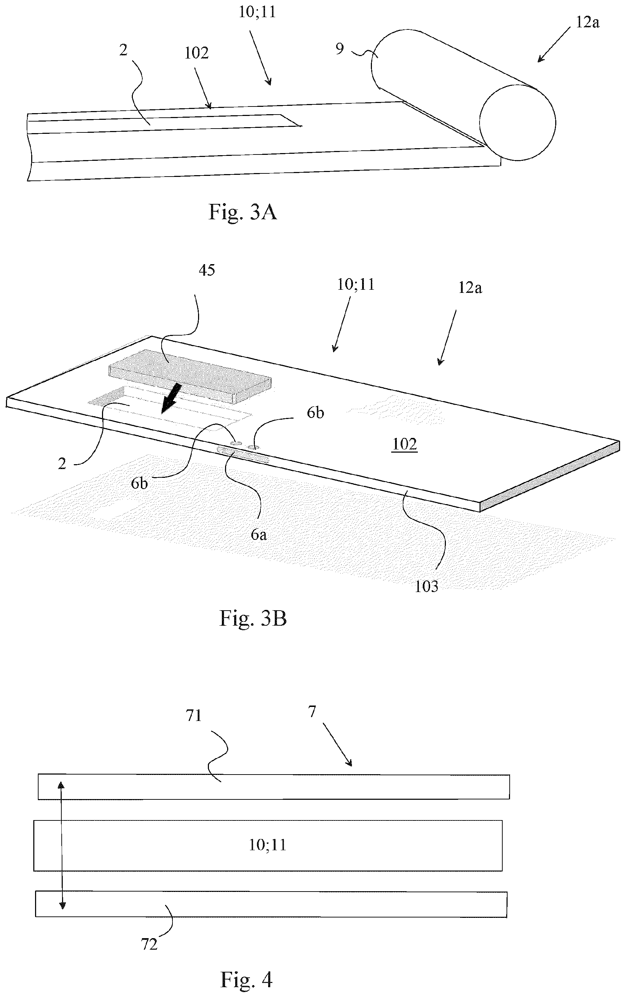

Fig. 3A shows another recycled door panel 10, from which is fashioned a blank recycled part 12a provided with a window opening 2. What is demonstrated by fig. 3A is how some of the gelcoat skin layer on top of the door panel 10 is removed for producing the blank recycled part 12a.

Fig. 3B shows yet another recycled door panel, from which is fashioned a blank recycled part 12a. The blank recycled part 12a depicted in fig. 3B has a window opening 2 and its surface is missing a gelcoat skin layer. What is also demonstrated by fig. 3A is how the door panel's 10 window opening is being fitted with a filler piece 45.

Fig. 4 shows, in a schematic cross-sectional view, a mold 7 useful for the compression molding of a door. The mold 7 comprises two mold halves 71 and 72, i.e. the two mold sections visible in fig. 4. The shape of each mold section is adapted to match a respective leaf element 101, 102 and a bridge element 103 connecting the same.

The reference embodiment shown in fig. 5 is used to illustrate a door panel 10 which does not have a recycled part 12. Such a door panel 10 includes a core layer 8 which contains a filler material 80. The filler material is surrounded by a fiber-reinforced polyester matrix 4.

The internal structure of a door 1; 1" fabricated from a recycled part 12 is illustrated in more detail in fig. 6. Illustrated schematically in fig. 6 is the door's 1, 1' internal structure, said door having been manufactured partly from virgin and partly from recycled materials. The core layer 8 is transferred as such, along with a one-piece recycled part or recycled blank visible in fig. 7, in the process of manufacturing the door 1; 1' made partly of virgin and partly of recycled materials and illustrated in fig. 6.

In figs. 6 and 7, the same reference numerals are used for those components which originate from a door made of a virgin material (polyester resin, a fiber reinforcement, a filler material, as well as a gelcoat skin layer 30).

Fig. 7 depicts schematically a recycled part 12. The recycled part 12 is made up of a one-piece body of the door panel 10, which includes two co-directional leaf elements 101 and 102, said leaf elements having been positioned by means of a bridge element 103 opposite to and at a distance from each other. In the recycled part 12, the door panel 10 has the polyester matrix of its body consisting of a recycled fiber-reinforced polyester matrix 4a (as the recycled part has been prefabricated from a previously compression molded door panel) and from its top is missing most of a gelcoat skin layer 30, preferably the entire gelcoat skin layer 30.

The invention will be described next in more detail with reference to figs. 1-7 and to the foregoing concise description thereof.

Fig. 5 shows, in a schematic cross-sectional view, some of the internal structure for a door 1; 1' manufactured from virgin materials (reference embodiment). The door 1 has its door panel 10 comprising two co-directional leaf elements 101, 102 positioned during the course of compression molding by means of a bridge element 103 at a distance from, opposite to, each other. In a space defined by the leaf elements 101, 102 and by the bridge element 103 connecting the same is left a core layer 8 of the door panel 10, said core layer 8 having a filler material 80 incorporated therein. The plastic composite of each leaf element 101, 102 comprises a fiber-reinforced polyester matrix 4 based on ethylenically unsaturated polyester resin and giving mechanical strength to the compression molded door panel 10. On the surface of said polyester matrix 4 is provided, during the course of compression molding, a gelcoat skin layer 30 which gives chemical resistance to the door panel and is based on ethylenically unsaturated polyester resin.

The leaf elements 101, 102 and said bridge element 103 are conjoined in compression molding seamlessly to each other. As seen from figs. 2 and 3B, the bridge element 103 is transverse to the direction of the leaf elements 101, 102 and encircles the longitudinal and lateral end faces of the leaf elements 101, 102.

For example, the gelcoat skin layer 30 on the door panel's 10 leaf elements 101, 102 can have a thickness of 0,5 mm.

The door panel's 10 core element 8 can have a width of about 40 mm crosswise of the door panel.

Each fiber-reinforced polyester matrix 4 can have a thickness of about 2,5 mm crosswise of the door panel 10. When the door 1 is manufactured from virgin resin and fibers, the compression molding of the door is performed with a mold illustrated in fig. 4.

Onto the surface of each mold section 71, 72 is applied a gelcoat coating 3 prepared from polyester resin. This is followed by laminating on top of the gelcoat coating of each mold section 71, 72 a number of fiber material fortified, ethylenically unsaturated polyester resin based fiber-reinforced resin layers 40. Before the mold sections 71, 72 are placed face to face and pressed against each other, while heating, between the mold sections 71, 72 is introduced a filler material 80 (cf. fig. 5). With regard to the implementation of heating and pressing in the compression molding of a door, reference is here made to general prior art technology.

The filler material 80 depicted in fig. 5 may consist of foamed polyurethane or a polyurea resin-based material used instead of polyurethane, one or more polyurethane panels, one or more plasterboards, or a barium sulphate-based gypsum panel, or vermiculite. Other inert filler materials may also be possible.

The surface 3 of a compression molded door panel as illustrated in figs. 1 and 5 is required, when tested in compliance with standard SFS-EN 950, to have such a hard body impact resistance that the impact mark left on the door panel has a diameter of not more 1,5 mm and an average for indentations of not more than 1 mm.

At a vertical load of 1000 N, the door panel 10 should have a consequent deflection of not more than 1,0 mm when determined by a test method consistent with standard SFS-EN-947.

The door panel's consequent deflection caused by a torsional load of 350 N should be less than 2 mm when determined by a test method consistent with standard SFS-EN-948.

In addition, the door panel should have resistance to chemicals and oxidizing agents for at least two hours or at least 16 hours, when determined in compliance with standard EN 14688, for one or more of the following substances: an acid such as acetic acid (10% v/v), a base such as sodium hydroxide (5%(m/m), an alcohol such as ethanol (70% v/v), a bleach such as sodium hypochlorite, an oxidizing agent such as methylene blue (1% m/m), and a salt such as sodium chloride (50% v/v).

Further, the door's 1 surface made of gelcoat material should be resistant to cold liquid substances as determined according to standard DIN 68861 (SFS- EN 12720) for the following substances: coffee, mild detergent, cola beverage, olive oil, paraffin oil, acetone, hydrogen chloride, milk, blood.

The recycled part 12 of the invention, the top of which is thus missing a gelcoat skin layer (glazing), is utilized for manufacturing a compression molded door. This is demonstrated particularly in figs. 2-4, 6-8.

The compression molded door is manufactured as follows (cf. fig. 8). An employed mold 7 is again the mold visible in fig. 4, which comprises two mold halves 7; 71, 7; 72. The shape of each mold section is again adapted to enable the use thereof for fabricating leaf elements 101, 102 and a bridge element 103 connecting the same (step 100). Onto the surface of each mold section 71, 72 is applied a gelcoat coating 3 prepared from polyester resin (step 200). This is followed by laminating on top of the gelcoat coating 3 of each mold section 71, 72 a few, often just one, fiber material-fortified, ethylenically unsaturated polyester resin based fiber-reinforced resin layers 40 (step 300).

Before the mold sections 71, 72 are pressed against each other, while heating, between the mold sections 71, 72 is placed a recycled part 12 of the door panel 10, said part comprising most of a fiber-reinforced polyester matrix 4a of the prefabricated door panel 10; 11, but not a gelcoat skin layer 3 (step 400). This is followed by closing the mold 7 by compressing said two mold sections 71, 72 together while heating (step 500). With regard to the specific implementation of heating and pressing in the compression molding of a door, reference is here again made to general prior known technology.

Hence, the door panel 10 constructed as described above comprises both virgin plastic composite 4 and recycled plastic composite originating from the recycled part 12 and comprising for the most part a fiber-reinforced polyester matrix 4a as well as a filler material 80. The polyester matrix 4a of the recycled part 12 has its surface stripped of a gelcoat skin layer 30. The recycled part 12 of the door panel 10 comprises generally most of the fiber-reinforced polyester matrix 4a of a previously, for example by compression molding, fabricated door panel 10; 11.

A recycled part 12, utilized in the above-described compression molding of a door, or a door panel made up of the recycled part 12, are illustrated in a schematic cross-sectional side view in fig. 7. The door panel 10 may comprise either just a recycled part 12 or a recycled blank. Such a door panel 10 contains a core layer 8 with a filler material 80. The filler material 80 is surrounded by a fiber-reinforced (recycled) polyester matrix 4a. From top of the polyester matrix 4a is missing a gelcoat skin layer, i.e. the fiber-reinforced polyester matrix 4a constitutes a surface for the recycled part.

Fig. 6 shows a compression molded door 1; 1" manufactured as described above by utilizing a recycled part 12 in its manufacturing process. The door panel 10 comprises two co-directional leaf elements 101, 102 positioned during the course of compression molding by means of a bridge element 103 at a distance from, opposite to, each other. In a space defined by the leaf elements 101, 102 and by the bridge element 103 connecting the same is formed a core layer 8 of the door panel 10, in which core layer 8 is now placed, during compression molding, a one-piece recycled part 12 of the door panel (cf. fig. 7). The leaf elements 101, 102 and said bridge element 103 are in compression molding coupled seamlessly to each other.

As seen again from figs. 2 and 3B, the bridge element 103 is transverse to the direction of leaf elements 101, 102 and encircles the longitudinal and lateral end faces of leaf elements 101, 102.

Each leaf element 101 and 102 comprises a plastic composite, which is fabricated from an ethylenically unsaturated polyester resin based, fiber-reinforced polyester matrix 4 providing the compression molded door panel 10 with mechanical strength. On top of said polyester matrix 4 is laid a gelcoat skin layer 30 providing the door panel with chemical resistance and being based on ethylenically unsaturated polyester resin.

About 50-90 wt% of the fiber-reinforced polyester matrix 4 originates from a recycled polyester matrix 4a, which therefore comes originally from a previously fabricated door panel 10; 11 (for example, from the door panel consisting of a recycled part 12 as depicted in fig. 7), whose top is missing a gelcoat skin layer and which thereby makes up most of the fiber-reinforced polyester matrix 4.

On the other hand, 10-50 wt% of the fiber-reinforced polyester matrix 4 consists of a virgin fiber-reinforced polyester matrix 40, which has been laminated on top of a hardened gelcoat coating 3 applied onto each mold half 71, 72.

In a preferred embodiment of the invention, about 90 wt% of the fiber-reinforced polyester matrix 4 comprises a recycled fiber-reinforced polyester matrix 4a and 10 wt% originates from a previously manufactured door and comprises a layer of new, virgin fiber-reinforced polyester matrix 40.

When using a recycled door panel part 12, the thickness of a polyester resin layer to be laminated onto each mold half 71, 72 is merely a fraction of what it would be in case the formation of a fiber-reinforced polyester resin matrix (layer) 4 were carried out by only using virgin fiber and virgin polyester resin.

The gelcoat skin layer 30 of leaf elements 101, 102 for the door panel 10 including a recycled part 12 has for example a thickness of 0,5 mm. The door panel's 10 core element 8 has a width of about 40 mm crosswise of the door panel. The fiber-reinforced polyester matrix layer 4 (4a+40a) of each leaf element 101, 102 has a thickness of about 2,5 mm crosswise of the door panel 10.

In a preferred embodiment of the invention, the plastic composite's ethylenically unsaturated polyester resin based fiber-reinforced polyester matrix layer 4 (4a+40) contains fiberglass.

Also, the door 1 containing a recycled part 12 should fulfill the same requirements as the compression molded door manufactured for virgin material.

The door panel's resistance to hard body impact, tested in compliance with standard SFS-EN 950, is required to be such that the impact mark left on the door panel has a diameter of not more than 1,5 mm and an average for indentations of not more than 1 mm.

At a vertical load of 1000 N, the door panel 10 should have a consequent deflection of not more than 1,0 mm when determined by a test method consistent with standard SFS-EN-947.

The door panel's consequent deflection caused by a torsional load of 350 N should be less than 2 mm when determined by a test method consistent with standard SFS-EN-948.

When the door's 1 door panel 10 is constructed from a recycled part 12 (cf. fig. 7), it is generally required that this recycled part 12 be fabricated from a recycled blank 12a derived from a previously manufactured door panel 10; 11 (cf. figs. 2, 3A and 3B) in order to make it suitable for manufacturing the door 1 with proper torsional strength and hardness.

Illustrated in figs. 2, 3A-3B is preparation of a blank 12a for the door's 1 recycled part 12.

Generally speaking, the blank for a recycled part is prepared from a previously fabricated door panel 10, which is stripped of hardware 5 and a window as well as a gelcoat skin layer. The thus obtained door panel is used as a blank 12a for the recycled part 12. Hence, the blank recycled part 12a comprises a recycled door panel 10; 11, which does not have a gelcoat skin layer and which is formed with window openings 2 or hardware openings 6 from which, respectively, the windows or hardware items have been removed. The thus obtained blank 12a of a recycled part 12, which includes openings 2, 4 originating from window openings or hardware fittings of the previously, for example by compression molding, manufactured door panel 10; 11, will be further processed for producing a recycled part 12 for the door panel 10.

The blank recycled part 12a has its window openings 2 and hardware openings 6 fitted with filler pieces 45, and possibly with an adhesive used for gluing the filler pieces. Thereby is produced a one-piece recycled part 12, which has been stripped of a gelcoat skin 3; 30 and which comprises filler pieces 45 and possibly an adhesive used for gluing the filler pieces.

The blank recycled part 12a, visible in fig.2 and made up of a recycled door panel 10; 11, has been fabricated by removing both a gelcoat skin layer 30 and a window from the previously manufactured door panel. Thereby is obtained the blank recycled part 12a, which includes a window opening 2 visible in fig. 2. In addition, the blank recycled part 12a visible in fig. 2 includes a number of hardware openings 6; 6a, 6b (lock opening 6a, handle opening 6b, and knob opening 6b), wherein each hardware opening 6a and 6b has been created by removing a hardware item 5 from the door panel 10; 11 manufactured earlier by compression molding. The hardware item 5 has been selected from a group, comprising a door handle 5; 52, a hinge 5; 51, a knob and lock 5; 53.

Fig. 3A shows a blank recycled part 12a, including a window opening 2 which has been made by removing a window from a blank of the window opening 2 in a previously manufactured door panel 10; 11. The door panel 10; 11 shown in fig. 3A is in the process of having a gelcoat skin layer 3 (glazing) removed from its surface with a grinding tool 9 for producing a blank 12a of the recycled part 12

Fig. 3B shows how a filler piece 45 is being fitted in a window opening 2 shown in fig. 2 and included in a blank 12a of the recycled part 12. The filler piece originates for example from a material removed in the process of making a window opening 2 for some earlier manufactured door panel 11. Serving as a blank for the door panel's 10 recycled part is a previously manufactured door panel 10; 11, in which is formed a window opening and from which has been removed a gelcoat skin layer. On the other hand, the door panel 10; 11 itself may have been fabricated from virgin plastic composite or, alternatively, it may contain material from another, previously fabricated recycled part of a door panel.

Accordingly, the filler pieces 45 can be either filler pieces 45 worked out of a material removed from openings 2, 6 made in the door panel 10, or separately fabricated filler pieces 45. The filler piece 45 comprises an ethylenically unsaturated polyester resin based fiber-reinforced polyester matrix.

Preferably, however, the filler pieces 45 comprise an ethylenically unsaturated polyester resin based fiber-reinforced polyester matrix removed from the recycled door panel's 10; 11 openings 2, 6.

### Working example 1

The resistance to chemicals and oxidizing agents of a door panel containing the recycled part 12 was determined by a method consistent with standard SFS-EN 14688, section 5.5.1.1'. Prior to testing, the temperature and moisture of each door panel were allowed to stabilize over the period of 24 h to the temperature of 23+-2 degrees and to the relative humidity of 50%+ 5%. Chemicals and oxidizing agents were as follows:
Acid: acetic acid, CH₃COOH (10% v/v),
Base: sodium hydroxide, NaOH (5% (m/m)
Alcohol: ethanol C₂H₅OH (70% v/v)
Bleach: Sodium hypochlorite NaOCl, 5% active chlorine (Cl₂)
Oxidant: methylene blue (1% m/m)
Salt: Sodium chloride, NaCl 170 gl/l diluted to 50%.

After completing the test (2 hours from the exposure of a door panel's surface), no considerable marks of chemicals or oxidizing agents were observed on the door panel's washed and dried surface.

After 16 hours, only NaOH had left moderate marks and even the stain caused by methylene blue had vanished.

### Working example 2

A fiberglass-reinforced door panel, containing a recycled part, was examined by a method consistent with standard DIN 68861 (SFS-EN 12720) to determine the resistance of its surface to discoloration caused by cold liquids and to other defects determined in standard SFS-EN 14688. Prior to testing, the temperature and moisture of each door panel were allowed to stabilize for the period of 24 h to the temperature of 23+-2 degrees and to the relative humidity of 50%+5%.

| Cold liquid | | Mark left on door panel surface on a scale of 1-5 |
|---|---|---|
| 1. | Coffee | 5 |
| 2. | Detergent (Serto) | 5 |
| 3. | Cola beverage (Coca Cola) | 5 |
| 4. | Indian ink (waterproof) | 1 |
| 5. | Cleaner (Fairy) | 5 |
| 6. | Olive oil | 5 |
| 7. | Paraffin oil | 5 |
| 8. | Acetone | 4 |
| 9. | Hydrogen chloride or hydrochloric acid (HCI) | 3 |
| 10. | Milk | 5 |
| 11. | Animal blood (cattle) | 5 |
| 12. | Chlorine | 5 |

Surface changes (discoloration, etc.) in visual examination: 1 Major change, 2 considerable change, 3 moderate change; 4: minor change; 5: no changes. Thus, the door panels were well resistant to all normal household liquids and beverages in daily use.

### Working example 3

The resistance of a door panel, containing the recycled part 12, to chemicals and oxidizing agents was determined by a method consistent with standard SFS-EN 14688, section 5.5.1.1'. Prior to testing, the temperature and moisture of each door panel were allowed to stabilize over the period of 24 h to the temperature of 23+-2 degrees and to the relative humidity of 50%+ 5%. Chemicals and oxidizing agents were as follows:
Acid: acetic acid, CH₃COOH (10% v/v),
Base: sodium hydroxide, NaOH (5% (m/m)
Alcohol: ethanol C₂H₅OH (70% v/v)
Bleach: Sodium hypochlorite NaOCl, 5% active chlorine (CI₂)
Oxidizing agent: methylene blue (1% m/m)
Salt: Sodium chloride, NaCl 170 gl/l diluted to 50%.

After completing the test (2 hours from the exposure of a door panel's surface), a slight mark of methylene blue was left and there were no visible marks of other chemicals and oxidants on the washed and dried surface of a door panel made up of the recycled part alone. After 16 hours, the stain caused by methylene blue was all but disappeared.

### Working example 4

The surface of a recycled part was examined by a method consistent with standard DIN 68861 (SFS-EN 12720) to determine its resistance to discoloration caused by cold liquids and to other defects determined in standard SFS-EN 14688. Prior to testing, the temperature and moisture of each door panel were allowed to stabilize for the period of 24 h to the temperature of 23+-2 degrees and to the relative humidity of 50%+5%.

| Cold liquid | | Mark left on door panel surface on a scale of 1-5 |
|---|---|---|
| 1. | Coffee | 5 |
| 2. | Detergent (Omo) | 5 |
| 3. | Cola beverage (Coca Cola) | 5 |
| 4. | Indian ink (waterproof) | 1 |
| 5. | Cleaner (Fairy) | 3 |
| 6. | Olive oil | 3 |
| 7. | Paraffin oil | 5 |
| 8. | Acetone | 4 |
| 9. | Hydrogen chloride or hydrochloric acid (HCl) | 3 |
| 10. | Milk | 5 |
| 11. | Animal blood (cattle) | 4 |
| 12. | Chlorine | 5 |

Surface changes (discoloration, etc.) in visual examination: 1 Major change, 2 considerable change, 3 moderate change; 4: minor change; 5: no changes. Thus, the uncoated door panels were only moderately resistant to all normal household liquids and beverages in daily use.

This is probably due to the fiber-reinforced polyester surface being considerably rougher than the gelcoat surface and thereby susceptible to gathering dirt and dust. The recycled part 12 as such cannot be used as door panel, but it must be coated with a gelcoat skin layer to obtain a sufficiently smooth door panel surface.

### List of reference numerals

- 1: Door
- 10: door panel
- 11: recycled door panel
- 12: recycled part
- 12a: blank recycled part
- 101: leaf element
- 102: leaf element
- 103: bridge element
- 20: frame
- 2: window opening
- 3: Gelcoat coating (in mold)
- 30: Gelcoat skin layer (door panel coating)
- 4: Fiber-reinforced polyester resin matrix
- 4a: Fiber-reinforced polyester resin matrix (recycled)
- 40: Fiber-reinforced polyester matrix (from virgin material)
- 45: Filler piece
- 5: Hardware item
- 51: hinge
- 52: handle
- 53: lock
- 6: Hardware opening
- 6a: lock case opening
- 6b: handle opening
- 7: Mold
- 71: mold section (mold half)
- 72: mold section (mold half)
- 8: Core layer
- 80: Filler material
- 9: Grinding tool
- 100, 200, 300, 400, -500: method steps

## Claims

1. A polyester resin based glass fiber-reinforced door (1), wherein the door (1) comprises a door panel's (10) sandwich-structured body manufactured by compression molding from
- virgin plastic composite by laying a gelcoat coating (3) on the internal surface of a mold's (7) two separate mold halves (71, 72), by allowing these gelcoat coatings (3) harden, and by laminating on top of the discussed hardened gelcoat coatings (3) one or more glass fiber-reinforced polyester matrix layers, as well as from
- a recycled part (12), which comprises a one-piece body of the door panel (10), which includes two co-directional leaf elements (101; 102) positioned by means of a bridge element (103; 103'; 103") at a distance from, opposite to, each other and in which recycled part (12) the door panel (10) has its body made up of an ethylenically unsaturated polyester resin based glass fiber-reinforced polyester matrix (4), the top of which glass fiber-reinforced polyester matrix lacks most of a gelcoat skin layer (30), preferably the entire gelcoat skin layer (30), and
wherein the compression molding comprises disposing the recycled part (12) between said glass fiber-reinforced polyester matrix layers, said polyester matrix layers having been laminated on top of the hardened gelcoat coatings (3) laid on the internal surface of the mold's (7) halves (71, 72), and closing the mold.

2. The polyester resin based glass fiber-reinforced door (1) according to claim 1, wherein the polyester resin based glass fiber-reinforced door (1) is resistant to chemicals and oxidizing agents when determined according to standard **EN** 14688 (SFS-EN 12720) in a testing period of at least two hours or at least 16 hours for the following substances: an acid such as acetic acid (10% v/v), a base such as sodium hydroxide (5% (m/m), an alcohol such as ethanol (70% v/v), a bleach such as sodium hypochlorite, an oxidizing agent such as methylene blue (1% m/m), and a salt such as sodium chloride (50% v/v).

3. The polyester resin based glass fiber-reinforced door (1) according to claim 1, wherein the polyester resin based glass fiber-reinforced door's (1) surface is resistant to the effect of cold liquids when determined according to standard **DIN** 68861 (SFS-EN 12720) for the following substances: coffee, mild detergent, cola beverage, olive oil, paraffin oil, acetone, hydrogen chloride, milk, bovine blood, whereby the door surface in visual inspection develops at most a minor change, 4, from acetone and a moderate change, 3, from hydrochloric acid.

4. The polyester resin based glass fiber-reinforced door (1) according to claim 1, further comprising a hollow core layer (8), which is present inside the body fabricated from a glass fiber-reinforced polyester matrix and which contains a filler material (80); the filler material (80) optionally being selected from a group including a polyurea resin-based material, polyurethane panel, foamed polyurethane, plaster-board, barium sulphate-based gypsum panel, and vermiculite.

5. The polyester resin based glass fiber-reinforced door (1) according to claim 1, wherein the door panel (10) comprises a gelcoat skin layer (30) with a thickness of 0,5 mm and an ethylenically unsaturated polyester resin based glass fiber-reinforced laminate layer (4, 40) made up of a glass fiber-reinforced polyester matrix and having a thickness of 2-5 mm, whereby, at a vertical load of 1000 N, the door panel has a consequent deflection of not more than 1,0 mm as determined by a test method consistent with standard SFS-EN 947.

6. The polyester resin based glass fiber-reinforced door (1) according to claim 5, wherein the gelcoat skin layer (30) has a thickness of 0,5 mm crosswise of the door panel and the fiber-reinforced polymer matrix has a thickness of 2,5 mm crosswise of the door panel.

7. A method of manufacturing a polyester resin based glass fiber-reinforced door (1), wherein the door (1) is manufactured by:
- providing two mold sections (mold halves) (7; 71, 7; 72), which are adapted to be used for producing each leaf element (101, 102) and a bridge element/bridge elements (103) connecting the same,
- applying onto the surface of both mold sections (71, 72) a gelcoat coating (3) prepared from polyester resin,
- laminating on top of the hardened gelcoat coating (3) of each mold section (71, 72) at least one ethylenically unsaturated polyester resin based glass fiber-reinforced resin layer (40) fortified with a glass fiber material,
- placing between the mold sections (71, 72), especially between the glass fiber-reinforced polyester matrix layers (40) applied onto each mold section (71, 72), said polyester matrix layers (40) having been laminated on top the hardened gelcoat coatings (3) laid on the internal surface of the mold sections (71, 72), a recycled part (12), comprising a one-piece door panel's (10) body which includes two co-directional leaf elements (101, 102) positioned by means of a bridge element at a distance from, opposite to, each other said body of the recycled part's (4) door panel (10) having been constructed from a glass fiber-reinforced polyester matrix (4) and missing from its top a gelcoat coating (30),
- closing the mold (7) by compressing said two old sections (71, 72) together while heating.

8. The method according to claim 7, wherein from top of the recycled part (12) is missing a gelcoat skin layer (30), whereby the recycled part's (12) surface does not measure up to the required resistance to cold liquids but, instead, the cold liquid brings about at least a moderate change 3 on the object's surface as determined according to standard **DIN** 68861 (SFS-EN 12720) in a testing period of 2 or 16 hours for three or more of the following substances: coffee, mild detergent, cola beverage, ink (waterproof), olive oil, paraffin oil, acetone, hydrogen chloride, milk, animal blood.

9. The method according to claim 8, wherein the door panel's (10) recycled part (12) comprises a door panel (11), from which has been removed a gelcoat skin layer (30), and which recycled part (12) includes a substantial portion of the glass fiber-reinforced polyester resin matrix needed for manufacturing the door panel (1).

10. The method according to claim 7, wherein the recycled part (12) further comprises a core layer (8) which contains a filler material.

11. The method according to claim 7, wherein the polyester resin used for preparing a polyester matrix is produced by allowing at least one ethylenically unsaturated dicarboxylic acid or its acid anhydride, or a mixture of unsaturated dicarboxylic acid and saturated dicarboxylic acid, to react with at least one polyol.

12. The method according to claim 11, wherein the ethylenically unsaturated dicarboxylic acid or its acid anhydride is selected from a group, including maleic acid, maleic anhydride, fumaric acid, itaconic acid, phthalic acid, phthalic anhydride, isophthalic acid, terephthalic acid, tetrahydrophthalic anhydride, nadic anhydride, methyl nadic anhydride, hexahydrophthalic anhydride, dimethyl terephthalate, recycled terephthalate.

13. The method according to claim 11, wherein the polyol is selected from a group, including glycols such as ethylene glycol, propylene glycol; diols such as 1,3-propanediol, 1,4-propanediol, 1,4-butanediol, 2,2-methyl-1,3-propanediol, 2-methyl-1,3-propanediol; glycol ethers; and triols such as glycerol and trimethylpropane.

14. The method according to any of claims 7-13, wherein the polyester resin used for preparing a glass fiber-reinforced polyester matrix is produced by allowing phthalic acid or its anhydride to react with a suitable polyol.

15. The method according to any of claims 7-14, wherein the polyester resin used for preparing a gelcoat skin layer (30) is produced by allowing isophthalic acid or its anhydride to react with a suitable polyol.

## Patentansprüche

1. Glasfaserverstärkte Tür (1) auf Polyesterharzbasis, wobei die Tür (1) einen sandwichartig strukturierten Körper einer Türplatte (10) umfasst, der hergestellt wird durch Formpressen aus
- Kunststoffverbundwerkstoff durch Auftragen einer Gelcoat-Beschichtung (3) auf die innere Oberfläche der beiden getrennten Formhälften (71, 72) einer Form (7), durch Aushärtenlassen dieser Gelcoat-Beschichtungen (3) und durch Auflaminieren einer oder mehrerer glasfaserverstärkter Polyestermatrixschichten auf die erörterten ausgehärteten Gelcoat-Beschichtungen (3) sowie aus
- einen recycelten Teil (12), der einen einteiligen Körper der Türplatte (10) umfasst, der zwei gleichgerichtete Flügelelemente (101; 102) einschließt, die mittels eines Brückenelements (103; 103'; 103") in einem Abstand zueinander gegenüberliegend positioniert sind, und wobei das recycelte Teil (12) der Türplatte (10) einen Körper aufweist, der auf einer glasfaserverstärkten Polyestermatrix (4) basierend auf einem ethylenisch ungesättigten Polyesterharz basiert, wobei der Oberseite der glasfaserverstärkten Polyestermatrix der größte Teil einer Gelcoat-Hautschicht (30), vorzugsweise die gesamte Gelcoat-Hautschicht (30), fehlt, und
wobei das Formpressen das Anordnen des recycelten Teils (12) zwischen den glasfaserverstärkten Polyestermatrixschichten umfasst, wobei die Polyestermatrixschichten auf die gehärteten Gelcoat-Beschichtungen (3) laminiert wurden, die auf die innere Oberfläche der Hälften (71, 72) der Form (7) gelegt wurden, und das Schließen der Form.

2. Glasfaserverstärkte Tür (1) auf Polyesterharzbasis nach Anspruch 1, wobei die glasfaserverstärkte Tür (1) auf Polyesterharzbasis gegen Chemikalien und oxidierende Mittel beständig ist, wenn sie nach der Norm EN 14688 (SFS-EN 12720) in einer Testzeit von mindestens zwei Stunden oder mindestens 16 Stunden für die folgenden Substanzen bestimmt wird: eine Säure wie Essigsäure (10 % Vol./Vol.), eine Basis wie Natriumhydroxid (5 % Mol./Mol.), ein Alkohol wie Ethanol (70 % Vol./Vol.), ein Bleichmittel wie Natriumhypochlorit, ein Oxidationsmittel wie Methylenblau (1 % Mol./Mol.), und ein Salz wie Natriumchlorid (50 % Vol./Vol.).

3. Glasfaserverstärkte Tür (1) auf Polyesterharzbasis nach Anspruch 1, wobei die glasfaserverstärkte Tür (1) eine Oberfläche aufweist, die gegen die Einwirkung von kalten Flüssigkeiten beständig ist, wenn sie nach der Norm DIN 68861 (SFS-EN 12720) für die folgenden Substanzen bestimmt wird: Kaffee, Feinwaschmittel, Cola-Getränk, Olivenöl, Paraffinöl, Aceton, Chlorwasserstoff, Milch, Rinderblut, wobei die Türoberfläche bei der Sichtprüfung höchstens eine geringfügige Veränderung, 4, gegenüber Aceton und eine mäßige Veränderung, 3, gegenüber Salzsäure aufweist.

4. Glasfaserverstärkte Tür (1) auf Polyesterharzbasis nach Anspruch 1, ferner umfassend eine hohle Kernschicht (8), die im Inneren des aus einer glasfaserverstärkten Polyestermatrix hergestellten Körpers vorhanden ist und ein Füllmaterial (80) enthält; wobei das Füllmaterial (80) optional aus einer Gruppe ausgewählt ist, die ein Material auf Polyharnstoffharzbasis, eine Polyurethanplatte, geschäumtes Polyurethan, Gipskartonplatten, Gipsplatten auf Bariumsulfatbasis und Vermiculit umfasst.

5. Glasfaserverstärkte Tür (1) auf Polyesterharzbasis nach Anspruch 1, wobei die Türplatte (10) eine Gelcoat-Hautschicht (30) mit einer Dicke von 0,5 mm und eine ethylenisch ungesättigte glasfaserverstärkte Laminatschicht auf Polyesterharzbasis (4, 40) umfasst, die aus einer glasfaserverstärkten Polyestermatrix besteht und eine Dicke von 2-5 mm aufweist, wobei die Platte bei einer vertikalen Last von 1000 N eine Durchbiegung von nicht mehr als 1,0 mm aufweist, wie durch ein Verfahren bestimmt, das mit der Norm SFS-EN 947 übereinstimmt.

6. Glasfaserverstärkte Tür (1) auf Polyesterharzbasis nach Anspruch 5, wobei die Gelcoat-Hautschicht (30) eine Dicke von 0,5 mm quer zur Türplatte aufweist und die faserverstärkte Polymermatrix eine Dicke von 2,5 mm quer zur Türplatte aufweist.

7. Verfahren zum Herstellen einer glasfaserverstärkten Tür (1) basierend auf Polyesterharz, wobei die Tür (1) hergestellt wird durch:
- Bereitstellen von zwei Formabschnitten (Formhälften) (7; 71, 7; 72), die für die Herstellung jedes Blattelements (101, 102) und eines Brückenelements/von Brückenelementen (103), das/die diese verbindet/verbinden, verwendet werden können,
- Auftragen einer aus Polyesterharz hergestellten Gelcoat-Beschichtung (3) auf die Oberfläche der beiden Formabschnitte (71, 72),
- Laminieren auf die gehärtete Gelcoat-Beschichtung (3) jedes Formabschnitts (71, 72) mindestens einer glasfaserverstärkten Harzschicht (40) basierend auf ethylenisch ungesättigtem Polyesterharz, die mit einem Glasfasermaterial verstärkt ist,
- Platzieren eines recycelten Teils (12) zwischen den Formabschnitten (71, 72), insbesondere zwischen den glasfaserverstärkten Polyestermatrixschichten (40), die auf jedem Formabschnitt (71, 72) aufgebracht sind, wobei die Polyestermatrixschichten (40) auf die gehärteten Gelcoat-Beschichtungen (3), die auf der inneren Oberfläche der Formabschnitte (71, 72) aufgebracht sind, laminiert worden sind, das einen Körper einer einteiligen Türplatte (10) umfasst, der zwei gleichgerichtete Blattelemente (101, 102) aufweist, die mittels eines Brückenelements in einem Abstand voneinander und gegenüberliegend positioniert sind, wobei der Körper der Türplatte (10) des recycelten Teils (4) aus einer glasfaserverstärkten Polyestermatrix (4) aufgebaut ist und an seiner Oberseite eine Gelcoat-Beschichtung (30) fehlt,
- Schließen der Form (7) durch Zusammendrücken der beiden alten Abschnitte (71, 72) unter Erwärmung.

8. Verfahren nach Anspruch 7, wobei auf der Oberseite des recycelten Teils (12) eine Gelcoat-Hautschicht (30) fehlt, wodurch die Oberfläche des recycelten Teils (12) nicht die geforderte Beständigkeit gegen kalte Flüssigkeiten misst, sondern die kalte Flüssigkeit mindestens eine mäßige Veränderung 3 auf der Oberfläche des Objekts bewirkt, die nach der Norm DIN 68861 (SFS-EN 12720) in einer Testzeit von 2 oder 16 Stunden für drei oder mehr der folgenden Substanzen bestimmt wird: Kaffee, Feinwaschmittel, Cola-Getränk, Tinte (wasserfest), Olivenöl, Paraffinöl, Aceton, Chlorwasserstoff, Milch, Tierblut.

9. Verfahren nach Anspruch 8, wobei der recycelte Teil (12) der Türplatte (10) eine Türplatte (11) umfasst, von der eine Gelcoat-Hautschicht (30) entfernt wurde, und wobei der recycelte Teil (12) einen wesentlichen Abschnitt der glasfaserverstärkten Polyesterharzmatrix einschließt, die zur Herstellung der Türplatte (1) benötigt wird.

10. Verfahren nach Anspruch 7, wobei das rezyklierte Teil (12) ferner eine Kernschicht (8) umfasst, die ein Füllmaterial enthält.

11. Verfahren nach Anspruch 7, wobei das zur Herstellung einer Polyestermatrix verwendete Polyesterharz hergestellt wird, indem mindestens eine ethylenisch ungesättigte Dicarbonsäure oder ihr Säureanhydrid oder eine Mischung aus ungesättigter Dicarbonsäure und gesättigter Dicarbonsäure mit mindestens einem Polyol reagieren gelassen wird.

12. Verfahren nach Anspruch 11, wobei die ethylenisch ungesättigte Dicarbonsäure oder ihr Säureanhydrid aus einer Gruppe ausgewählt ist, die Maleinsäure, Maleinsäureanhydrid, Fumarsäure, Itaconsäure, Phthalsäure, Phthalsäureanhydrid, Isophthalsäure, Terephthalsäure, Tetrahydrophthalsäureanhydrid, Nadinsäureanhydrid, Methylnadinsäureanhydrid, Hexahydrophthalsäureanhydrid, Dimethylterephthalat, recyceltes Terephthalat einschließt.

13. Verfahren nach Anspruch 11, wobei das Polyol aus einer Gruppe ausgewählt ist, die Glykole wie Ethylenglykol, Propylenglykol; Diole wie 1,3-Propandiol, 1,4-Propandiol, 1,4-Butandiol, 2,2-Methyl-1,3-Propandiol, 2-Methyl-1,3-Propandiol; Glykolether; und Triole wie Glycerin und Trimethylpropan einschließt.

14. Verfahren nach einem der Ansprüche 7 bis 13, wobei das zur Herstellung einer glasfaserverstärkten Polyestermatrix verwendete Polyesterharz dadurch hergestellt wird, dass Phthalsäure oder ihr Anhydrid mit einem geeigneten Polyol reagieren gelassen wird.

15. Verfahren nach einem der Ansprüche 7 bis 14, wobei das zur Herstellung einer Gelcoat-Hautschicht (30) verwendete Polyesterharz dadurch hergestellt wird, dass Isophthalsäure oder ihr Anhydrid mit einem geeigneten Polyol reagieren gelassen wird.

## Revendications

1. Porte (1) renforcée de fibres de verre à base de résine polyester, dans laquelle la porte (1) comprend un corps de panneau de porte (10) à structure en sandwich, fabriqué par moulage par compression à partir de
- un composite en plastique vierge obtenu en appliquant un revêtement de gelcoat (3) sur la surface interne des deux moitiés distinctes (71, 72) d'un moule (7), en laissant ces revêtements de gelcoat (3) durcir, puis en stratifiant, par-dessus les revêtements de gelcoat (3) durcis, une ou plusieurs couches à matrice en polyester renforcées de fibres de verre, ainsi qu'à partir de
- une partie recyclée (12), qui comprend un corps monobloc du panneau de porte (10), lequel comporte deux éléments de vantail (101 ; 102) orientés dans la même direction, positionnés au moyen d'un élément de pont (103 ; 103' ; 103") à une certaine distance l'un de l'autre et en sens opposé, et dans laquelle, pour cette pièce recyclée (12), le corps du panneau de porte (10) est constitué d'une matrice en polyester renforcée de fibres de verre (4) à base de résine polyester éthyléniquement insaturée, dont la face supérieure de la matrice en polyester renforcée de fibres de verre est dépourvue de la majeure partie d'une couche de gelcoat (30), de préférence de la totalité de la couche de gelcoat (30), et
dans laquelle le moulage par compression comprend la disposition de la pièce recyclée (12) entre lesdites couches de matrice en polyester renforcées de fibres de verre, lesdites couches de matrice en polyester ayant été stratifiées par-dessus les revêtements de gelcoat (3) durcis appliqués sur la surface interne des moitiés (71, 72) du moule (7), et la fermeture du moule.

2. Porte (1) renforcée de fibres de verre à base de résine polyester selon la revendication 1, dans laquelle la porte (1) renforcée de fibres de verre à base de résine polyester est résistante aux produits chimiques et aux agents oxydants, telle que déterminée selon la norme EN 14688 (SFS-EN 12720) pendant une durée d'essai d'au moins deux heures ou d'au moins 16 heures pour les substances suivantes : un acide tel que l'acide acétique (10 % v/v), une base telle que l'hydroxyde de sodium (5 % m/m), un alcool tel que l'éthanol (70 % v/v), un agent de blanchiment tel que l'hypochlorite de sodium, un agent oxydant tel que le bleu de méthylène (1 % m/m) et un sel tel que le chlorure de sodium (50 % v/v).

3. Porte (1) renforcée de fibres de verre à base de résine polyester selon la revendication 1, dans laquelle la surface de la porte (1) renforcée de fibres de verre à base de résine polyester est résistante à l'action des liquides froids, telle que déterminée selon la norme DIN 68861 (SFS-EN 12720) pour les substances suivantes : café, détergent doux, boisson au cola, huile d'olive, huile de paraffine, acétone, chlorure d'hydrogène, lait, sang bovin, la surface de la porte ne présentant, lors d'un contrôle visuel, qu'une altération mineure 4 due à l'acétone et une altération modérée 3 due à l'acide chlorhydrique.

4. Porte (1) renforcée de fibres de verre à base de résine polyester selon la revendication 1, comprenant en outre une couche centrale creuse (8), qui est présente à l'intérieur du corps fabriqué à partir d'une matrice en polyester renforcée de fibres de verre et qui contient un matériau de remplissage (80) ; le matériau de remplissage (80) étant éventuellement choisi parmi un groupe comportant un matériau à base de résine de polyurée, un panneau de polyuréthane, du polyuréthane expansé, une plaque de plâtre, un panneau de plâtre à base de sulfate de baryum et de la vermiculite.

5. Porte (1) renforcée de fibres de verre à base de résine polyester selon la revendication 1, dans laquelle le panneau de porte (10) comprend une couche de gelcoat (30) avec une épaisseur de 0,5 mm et une couche stratifiée renforcée de fibres de verre à base de résine polyester éthyléniquement insaturée (4, 40) constituée d'une matrice en polyester renforcée de fibres de verre et ayant une épaisseur de 2 à 5 mm, moyennant quoi, sous une charge verticale de 1 000 N, a une déformation maximale de 1,0 mm, telle que déterminée par un procédé d'essai conforme à la norme SFS-EN 947.

6. Porte (1) renforcée de fibres de verre à base de résine polyester selon la revendication 5, dans laquelle la couche de gelcoat (30) a une épaisseur de 0,5 mm dans le sens transversal du panneau de porte et la matrice polymère renforcée de fibres a une épaisseur de 2,5 mm dans le sens transversal du panneau de porte.

7. Procédé de fabrication d'une porte (1) renforcée de fibres de verre à base de résine polyester, dans lequel la porte (1) est fabriquée par :
- la fourniture de deux sections de moule (moitiés du moule) (7 ; 71, 7 ; 72), destinées à être utilisées pour la fabrication de chaque élément de vantail (101, 102) et d'un ou plusieurs éléments de pont (103) reliant ceux-ci,
- l'application sur la surface des deux sections du moule (71, 72) d'un revêtement en gelcoat (3) à base de résine polyester,
- le laminage, par-dessus le revêtement en gelcoat (3) durci de chaque section du moule (71, 72), d'au moins une couche de résine (40) à base de résine polyester éthyléniquement insaturée, renforcée de fibres de verre,
- le placement, entre les sections du moule (71, 72), spécialement entre les couches de matrice en polyester renforcées de fibres de verre (40) appliquées sur chaque section du moule (71, 72), lesdites couches de matrice en polyester (40) ayant été laminées par-dessus les revêtements en gelcoat (3) durcis déposés sur la surface interne des sections du moule (71, 72), d'une pièce recyclée (12), comprenant le corps d'un panneau de porte monobloc (10) qui comporte deux éléments de vantail (101, 102) orientés dans la même direction positionnés au moyen d'un élément de pont à une certaine distance l'un de l'autre et en sens opposé, ledit corps du panneau de porte (10) de la pièce recyclée (4) ayant été fabriqué à partir d'une matrice en polyester renforcée de fibres de verre (4) et ne disposant pas, sur sa face supérieure, de revêtement en gelcoat (30),
- la fermeture du moule (7) en serrant lesdites deux anciennes sections (71, 72) l'une contre l'autre tout en les chauffant.

8. Procédé selon la revendication 7, dans lequel la partie recyclée (12) est dépourvue, sur sa face supérieure, d'une couche de gelcoat (30), la surface de la partie recyclée (12) ne présentant pas la résistance requise aux liquides froids, mais, en revanche, le liquide froid provoque au moins une altération modérée 3 sur la surface de l'objet, telle que déterminée selon la norme DIN 68861 (SFS-EN 12720) au cours d'une période d'essai de 2 ou 16 heures pour au moins trois des substances suivantes : café, détergent doux, boisson au cola, encre (résistante à l'eau), huile d'olive, huile de paraffine, acétone, chlorure d'hydrogène, lait, sang animal.

9. Procédé selon la revendication 8, dans lequel la partie recyclée (12) du panneau de porte (10) comprend un panneau de porte (11) dont la couche de gelcoat (30) a été retirée, et dans lequel ladite partie recyclée (12) comporte une partie substantielle de la matrice en résine polyester renforcée de fibres de verre nécessaire à la fabrication du panneau de porte (1).

10. Procédé selon la revendication 7, dans lequel la pièce recyclée (12) comprend en outre une couche centrale (8) qui contient un matériau de remplissage.

11. Procédé selon la revendication 7, dans lequel la résine polyester utilisée pour la préparation d'une matrice en polyester est produite en faisant réagir au moins un acide dicarboxylique éthyléniquement insaturé ou son anhydride d'acide, ou un mélange d'acide dicarboxylique insaturé et d'acide dicarboxylique saturé, avec au moins un polyol.

12. Procédé selon la revendication 11, dans lequel l'acide dicarboxylique éthyléniquement insaturé ou son anhydride d'acide est choisi parmi un groupe comportant l'acide maléique, l'anhydride maléique, l'acide fumarique, l'acide itaconique, l'acide phtalique, l'anhydride phtalique, l'acide isophtalique, l'acide téréphtalique, l'anhydride tétrahydrophtalique, l'anhydride nadique, l'anhydride méthylnadique, l'anhydride hexahydrophtalique, le téréphtalate de diméthyle et le téréphtalate recyclé.

13. Procédé selon la revendication 11, dans lequel le polyol est choisi parmi un groupe comportant des glycols tels que l'éthylène glycol, le propylène glycol ; des diols tels que le 1,3-propanediol, le 1,4-propanediol, le 1,4-butanediol, le 2,2-méthyl-1,3-propanediol, le 2-méthyl-1,3-propanediol ; des éthers de glycol ; et des triols tels que le glycérol et le triméthylpropane.

14. Procédé selon l'une quelconque des revendications 7-13, dans lequel la résine polyester utilisée pour la préparation d'une matrice polyester renforcée de fibres de verre est produite en faisant réagir de l'acide phtalique ou son anhydride avec un polyol approprié.

15. Procédé selon l'une quelconque des revendications 7-14, dans lequel la résine polyester utilisée pour la préparation d'une couche de gelcoat (30) est produite en faisant réagir de l'acide isophtalique ou son anhydride avec un polyol approprié.
